# EUROPÄISCHE PATENTSCHRIFT

(11) **EP 3 882 081 B1**
(45) Veröffentlichungstag und Bekanntmachung des Hinweises auf die Patenterteilung: **31.07.2024**
(21) Anmeldenummer: 21160499.6
(22) Anmeldetag: 03.03.2021
(51) Int. Cl.: B60R 5/00, B61D 37/00

(54) **FAHRZEUG ZUR PERSONENBEFÖRDERUNG MIT EINER GEPÄCKABLAGE**
PASSENGER TRANSPORT VEHICLE WITH A LUGGAGE STORAGE LOCATIONS
VÉHICULE DESTINÉ AU TRANSPORT DES PERSONNES POURVU DE PORTE-BAGAGE

(30) Priorität: 19.03.2020 DE 102020107639
(43) Veröffentlichungstag der Anmeldung: 22.09.2021
(73) Patentinhaber: MAN Truck & Bus SE, 80995 München (DE)
(72) Erfinder: Lipp-Allrutz, Andrea, 72108 Rottenburg (DE); Streicher, Michael, 80995 München (DE); Bergmaier-Trede, Thorsten, 80995 München (DE); Schönherr, Stephan, 80995 München (DE)
(74) Vertreter: v. Bezold & Partner Patentanwälte - PartG mbB

(56) Entgegenhaltungen:
- EP-A2- 1 702 825
- DE-U1- 202007 007 332
- JP-A- 2006 182 241

## Beschreibung

Die Erfindung betrifft ein Fahrzeug zur Personenbeförderung, beispielsweise einen Zug oder einen Omnibus mit einer Gepäckablage.

Um in Personenbeförderungsfahrzeugen, wie z. B. Omnibussen, eine Unterbringung von Gepäckstücken zu ermöglichen, ist es im Stand der Technik allgemein bekannt, in derartigen Fahrzeugen Gepäckablagen bereitzustellen. Die Gepäckablagen werden dabei in der Regel durch beidseitig oberhalb der Passagiersitze angebrachte und entlang der Fahrzeuglängsrichtung verlaufende Ablageflächen gebildet, an deren Unterseite oftmals zusätzlich Beleuchtungs-, Lautsprecher- und/oder Belüftungseinrichtungen angeordnet sind.

Beispielsweise offenbart die EP 1 702 825 A2 in diesem Zusammenhang eine Passagierkabine eines Schienenfahrzeugs, wobei ein Multifunktionsmodul mit einem Klimakanal, einer Beleuchtungsvorrichtung, einem Lautsprecher an einem Verbindungsteil zwischen einer Dachstruktur und einer Seitenstruktur des Schienenfahrzeugs angeordnet ist. Ein Gepäckträgerbügel und ein Handriemenbügel werden durch die Dachstruktur geführt und daran aufgehängt. Ein Verbindungsblock, der den Gepäckträgerbügel und den Handriemenbügel an den oberen Abschnitten verbindet und am Klimakanal befestigt ist, wird an der Dachstruktur angebracht.

Die Halterung der vorgenannten Ablageflächen am Fahrzeug erfolgt zumeist an den Seitenwänden und/oder der Fahrgastraumdecke, beispielsweise indem Teile der Rückwand der Gepäckablage als Haltestrukturen ausgebildet sind. Problematisch an den bisherigen Lösungen ist allerdings, dass dadurch große Bereiche des Fahrzeuginnenraums praktisch nicht genutzt werden können bzw. Teile der Fensterflächen verdeckt werden. Vor allem im Fall, dass das Fahrzeug hohe Fensterflächen, z. B. in Form sich bis in den Dachbereich erstreckender Panoramafenster, umfasst, um dadurch den Fahrzeuginsassen ein möglichst großes Sichtfeld ins Freie zu ermöglichen, besteht somit ein Bedarf an einer verbesserten Lösung für die Ausgestaltung der Gepäckablage. Entsprechend liegt der Erfindung die Aufgabe zugrunde, eine Gepäckablage der eingangs genannten Art derart weiterzubilden, dass diese platzsparender in den Fahrgastraum integriert werden kann und dadurch eine bessere Zugänglichkeit bzw. Nutzbarkeit der Fensterflächen des Fahrzeugs ermöglicht wird.

Diese Aufgabe wird durch ein Fahrzeug mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird ein Fahrzeug zur Personenbeförderung, z. B. ein Zug oder ein Omnibus, bereitgestellt. Das Fahrzeug weist dabei einen Fahrgastraum auf, der - vorzugsweise in Form mehrerer Sitzreihen angeordnete - Passagiersitze umfasst und der nach oben durch eine Fahrgastraumdecke und seitlich zumindest abschnittsweise durch eine Panoramafensterfläche, begrenzt wird. Die Panoramafensterfläche weist einen im Wesentlichen in Fahrzeughöhenrichtung (H) orientierten ersten Panoramafensterflächenabschnitt (3a) und einen dazu gekrümmten und/oder zum ersten Panoramafensterflächenabschnitt (3a) geneigten zweiten Panoramafensterflächenabschnitt (3b) auf, der den ersten Panoramafensterflächenabschnitt (3a) mit einem Fahrzeugdach (5) verbindet.

Weiterhin weist das Fahrzeug eine oberhalb der Passagiersitze angeordnete Gepäckablage (z. B. eine Überkopf-Gepäckablage) auf. Diese umfasst ein, sich in Fahrzeuglängsrichtung erstreckendes, vorzugsweise im Wesentlichen horizontales, Auflageteil zur Aufnahme von Gepäckstücken, wobei das Auflageteil auf Höhe der Fensterfläche angeordnet ist, sowie eine Halterung, mittels derer das vorgenannte Auflageteil an der Fahrgastraumdecke gehaltert ist. Vorzugsweise ist die Halterung, die auch als Aufhängung bezeichnet werden kann, dabei ebenfalls, zumindest teilweise, auf Höhe der Fensterfläche angeordnet. Der Ausdruck "auf Höhe der Fensterfläche" kann hierbei allgemein so verstanden werden, dass die entsprechenden Komponenten in Fahrzeughöhenrichtung wenigstens abschnittsweise denselben Abstand von der Fahrbahn, einer Fahrzeugachse und/oder dem Fahrgastraumboden aufweisen.

Um nun auf vorteilhafte Weise die Nutzbarkeit der Fensterfläche des Fahrzeugs zu erhöhen, ist vorgesehen, dass die Halterung der Gepäckablage für eine Sicht aus dem Fahrgastraum nach draußen zumindest abschnittsweise durchbrochen ausgebildet ist. Beispielsweise kann die Halterung der Gepäckablage hierzu Ausnehmungen, Durchbrüche und/oder sonstige Öffnungen umfassen, die eine Durchsicht auf die - aus Insassensicht "hinter" der Halterung liegende - Fensterfläche ermöglichen. Auf vorteilhafte Weise kann dadurch, wie nachfolgend noch genauer ausgeführt werden wird, zum einen der Lichteinfall in den Fahrgastraum (z. B. im Bereich eines Mittelgangs) erhöht werden, während zugleich für Passagiere eine Sichtverbindung nach draußen und damit eine bessere Nutzbarkeit der Fensterflächen ermöglicht wird.

Gemäß einem ersten Aspekt der Erfindung kann die Halterung in Fahrzeuglängsrichtung nicht durchgängig ausgebildet sein. Mit anderen Worten soll die Halterung in Fahrzeuglängsrichtung, z. B. nicht in Form einer durchgängigen Rückwand ausgeführt sein, sondern unterbrochen sein. Beispielsweise kann die Halterung hierzu in Form mehrerer, in Fahrzeuglängsrichtung verteilter, Träger und/oder Stützen ausgebildet sein, die miteinander nicht unmittelbar, sondern lediglich mittelbar über das Auflageteil verbunden sind. Auf vorteilhafte Weise kann dadurch eine Gepäckablage mit einer durchbrochenen Halterung bereitgestellt werden, die einerseits eine Sicht nach draußen ermöglicht und andererseits auf vorteilhafte Weise den Lichteinfall in den Fahrgastraum vergrößert.

Zudem oder alternativ kann die Gepäckablage auch zumindest abschnittsweise rückwandlos ausgebildet sein. Mit anderen Worten kann die Gepäckablage zumindest in einem Abschnitt keine - zumeist übliche - fensterseitige Rückwand umfassen. Besonders bevorzugt ist die Gepäckablage dabei komplett ohne durchgängige Rückwand ausgebildet. Auf vorteilhafte Weise können dadurch auch größere Gepäckstücke verstaut werden, deren Einlage ansonsten von der Rückwand limitiert werden würde, während gleichzeitig wiederum der Lichteinfall in den Fahrgastraum vergrößert wird.

Erfindungsgemäß ist die Fensterfläche eine Panoramafensterfläche. Als Panoramafensterfläche kann dabei eine großzügig gestaltete, bis in den Dachbereich ragende, direkt an das Fahrzeugdach anschließende und/oder als Teil des Fahrzeugdaches ausgebildete Fensterfläche verstanden werden. Die Panoramafensterfläche weist dabei einen im Wesentlichen in Fahrzeughöhenrichtung orientierten ersten Panoramafensterflächenabschnitt und einen dazu gekrümmten und/oder zum ersten Panoramafensterflächenabschnitt geneigten zweiten Panoramafensterflächenabschnitt auf, wobei der zweite Panoramafensterflächenabschnitt den ersten Panoramafensterflächenabschnitt mit einem Fahrzeugdach verbindet. Vorzugsweise schließen der erste und zweite Panoramafensterflächenabschnitt dabei einen Winkel zwischen 120° und 170°, besonders bevorzugt zwischen 140° und 160°, ein. Der Vorteil der Verwendung von Panoramafensterflächen liegt darin, dass gerade bei dieser Fensterform im Zusammenspiel mit der zumindest abschnittsweise durchbrochen ausgebildeten Halterung der Gepäckablage auf vorteilhafte Weise die Fensternutzung bzw. der Lichteinfall in den Fahrzeuginnenraum vergrößert werden kann.

Gemäß einem weiteren Aspekt der Erfindung kann die Halterung zumindest teilweise auf Höhe des zweiten Panoramafensterflächenabschnitts angeordnet sein. Besonders bevorzugt ist die Halterung dabei im Wesentlichen und/oder nahezu vollständig auf Höhe des zweiten Panoramafensterflächenabschnitts angeordnet. Auf vorteilhafte Weise kann dadurch ebenfalls der Lichteinfall über den zweiten Panoramafensterflächenabschnitt in den Fahrgastraum vergrößert werden.

Nach einem weiteren Aspekt der Erfindung kann die Gepäckablage und/oder die Halterung zumindest eine Aussparung umfassen. Diese zumindest eine Aussparung, welche auch als Ausnehmung, Freiraum und/oder Durchbruch bezeichnet werden kann, kann hierbei ausgebildet sein, eine direkte Sichtverbindung aus dem Fahrgastraum durch die zumindest eine Aussparung auf die Fensterfläche zu ermöglichen. Auf vorteilhafte Weise kann dadurch einem im Fahrgastraum befindlichen Insassen einen Blick auf die Fensterfläche und damit ein Ausblick ins Freie ermöglicht werden, wodurch insgesamt die Nutzbarkeit der Fensterfläche erhöht werden kann.

Zudem oder alternativ kann die zumindest eine Aussparung auch ausgebildet sein, einen Lichteinfall von der Fensterfläche durch die zumindest eine Aussparung in den Fahrgastraum, vorzugsweise in einem Bereich eines Mittelgangs des Fahrgastraums, zu ermöglichen. Mit anderen Worten kann durch die zumindest eine Aussparung - die in diesem Zusammenhang auch als Lichtöffnung und/oder Lichtdurchtrittsöffnung bezeichnet werden kann - ein Durchtritt von über die Fensterfläche einfallendem Licht durch die zumindest eine Aussparung in den Fahrgastraum ermöglicht werden. Auf vorteilhafte Weise kann dadurch Tageslicht von der Fensterfläche ins Fahrzeuginnere und/oder in den Fahrgastraum durchgeleitet werden und so der natürliche Lichteinfall in den Fahrgastraum, insbesondere im Bereich des oftmals schlecht ausgeleuchteten Fahrzeugmittelgangs, erhöht werden, sodass ggf. die Anbringung und/oder der Betrieb künstlicher Beleuchtungseinrichtungen (z. B. Deckenlampen) eingespart werden kann.

Gemäß einem weiteren Aspekt der Erfindung kann durch die vorgenannte zumindest eine Aussparung eine in diesem Bereich auf das Auflageteil ablegbare Gepäckgröße vergrößert werden. Mit anderen Worten können aufgrund der fehlenden bzw. ausgesparten Halterung im Bereich der Aussparung Gepäckstücke mit Abmessungen verstaut werden, deren Einlage ansonsten (d. h. bei nicht vorhandener Aussparung) durch die dort vorhandene Halterung limitiert werden würde. Auf vorteilhafte Weise kann so - neben einer besseren Nutzbarkeit der Fensterfläche - auch die Nutzbarkeit der Gepäckablage insgesamt verbessert werden.

Nach einem weiteren Aspekt der Erfindung kann die zumindest eine Aussparung in Fahrzeuglängsrichtung mindestens eine Querschnittsfläche von 10 dm², vorzugsweise mindestens eine Querschnittsfläche von 20 dm², aufweisen. D. h. die zumindest eine Aussparung kann sich in einer Ebene senkrecht zur Fahrzugquerrichtung mindestens über eine Fläche von 10 dm², vorzugsweise 20 dm², erstrecken. Zudem oder alternativ kann die zumindest eine Aussparung in Fahrzeuglängsrichtung eine größere Ausdehnung als in Fahrzeughöhenrichtung aufweisen. Letzteres ist besonders vorteilhaft, da dadurch über einen möglichst großen Fahrzeugbereich der Lichteinfall erhöht werden kann.

Um ferner auf vorteilhafte Weise einen möglichst hohen Lichteintrag in den Fahrgastraum zu ermöglichen, kann sich die zumindest eine Aussparung - gemäß einem weiteren Aspekt der Erfindung - in Fahrzeughöhenrichtung vom Auflageteil bis zur Fahrgastraumdecke erstrecken. Mit anderen Worten kann die Halterung in Fahrzeuglängsrichtung zumindest abschnittsweise vollständig unterbrochen sein. Zudem oder alternativ kann sich die zumindest eine Aussparung in Fahrzeuglängsrichtung auch über mehrere Passagiersitze erstrecken. Zudem oder alternativ kann die zumindest eine Aussparung auch vom Auflageteil, der Halterung und der Fahrgastraumdecke begrenzt werden. Mit anderen Worten sollen die vorgenannten Komponenten die Ausdehnung der zumindest einen Aussparung festlegen. Vorzugsweise kann die zumindest eine Aussparung dabei - bezogen auf die Fahrzeughöhenrichtung - nach unten durch das Auflageteil und nach oben durch die Fahrgastraumdecke begrenzt werden und/oder - bezogen auf die Fahrzeuglängsrichtung - durch Elemente der Halterung, beispielsweise durch im Wesentlichen in Fahrzeughöhenrichtung verlaufende Träger und/oder Stützen.

Um dabei auf vorteilhafte Weise über die gesamte Fahrzeuglänge einen möglichst hohen Lichteintrag in den Fahrgastraum zu erreichen, kann nach einem weiteren Aspekt der Erfindung die Gepäckablage und/oder die Halterung mehrere, vorzugsweise zumindest vier, in Fahrzeuglängsrichtung beabstandete Aussparungen umfassen. Diese mehreren Aussparungen können dabei sowohl gleichmäßig oder aber ungleichmäßig entlang der Fahrzeuglängsrichtung verteilt angeordnet sein. Vorzugsweise besitzen die Aussparungen dabei zueinander zumindest einen Abstand von 20 cm. Mit anderen Worten soll der Bereich der Gepäckablage bzw. der Halterung zwischen zwei benachbarten Aussparungen in Fahrzeuglängsrichtung mindestens 20 cm betragen. Auf vorteilhafte Weise kann dadurch ein Kompromiss zwischen einer ausreichenden Stabilität der Halterung und möglichst geringen Ausdehnung der Halterungsbereiche erreicht werden.

Zudem oder alternativ können die Aussparungen - vorzugsweise in Fahrzeuglängsrichtung betrachtet - einen Anteil von zumindest 30 %, bevorzugt zumindest 50 %, besonders bevorzugt zumindest 70 %, der Halterung der Gepäckablage ausmachen. D. h., mit anderen Worten kann der Anteil der Aussparungen, d. h. der durchbrochenen Bereiche, größer als der Anteil an vorhandener Halterung, d. h. der nicht durchbrochenen Bereiche, sein. Hierbei sollen die jeweiligen Anteile in Bezug auf eine theoretisch durchgängige Halterung ohne Aussparungen verstanden werden.

Gemäß einem weiteren Aspekt der Erfindung kann die Halterung mehrere, in Fahrzeuglängsrichtung verteilte und/oder vereinzelte, Hohlprofilträger zur Befestigung des Auflageteils an der Fahrgastraumdecke aufweisen. Als Hohlprofilträger, die auch als Hohlprofilstützen bezeichnet werden können, soll in diesem Zusammenhang ein rohrförmiges Profilelement, z. B. aus Kunststoff und/oder Aluminium, mit vorzugsweise viereckigem oder anderem geschlossenen Querschnitt verstanden werden. Mittels der vorgenannten Hohlprofilträger kann somit eine Verbindung zwischen Auflageteil und der Fahrgastraumdecke und damit eine Halterung bzw. Aufhängung des Auflageteils an der Fahrgastraumdecke erreicht werden. Aufgrund der hohlen Struktur der Hohlprofilträger können im Inneren der Hohlprofilträger auf vorteilhafte Weise auch Teile der Kabel- und/oder Luftführung für mögliche Beleuchtungs-, Audio- und/oder Belüftungseinrichtungen des Auflageteils untergebracht werden, sodass die Hohlprofilträger neben ihrer halternden Funktion gleichzeitig auch eine Art Verschalung für mögliche Versorgungsleitungen bilden können. Aufgrund dieser Doppelfunktion der Hohlprofilträger können auf vorteilhafte Weise Teile der ansonsten zur Kabel- und/oder Luftführung benötigten Komponenten eingespart werden.

Nach einem weiteren Aspekt der Erfindung können die Hohlprofilträger jeweils im Wesentlichen in Fahrzeughöhenrichtung orientiert sein und/oder einen viereckigen Querschnitt aufweisen. Mit anderen Worten können die Hohlprofilträger in einer Ebene senkrecht zur Fahrzeughöhenrichtung einen viereckigen Querschnitt besitzen. Beispielsweise können die, die Hohlprofilträger seitlich - d. h. in Fahrzeugquerrichtung - begrenzende, Wandungen dabei im Wesentlichen senkrecht zur Fahrzeugquerrichtung ausgerichtet sein. Auf vorteilhafte Weise kann dadurch eine möglichst stabile und gleichzeitig materialsparende Befestigung des Auflageteils realisiert werden.

Gemäß einem weiteren Aspekt der Erfindung können die Halterung und/oder die Hohlprofilträger an einem fensterseitigen Endbereich des Auflageteils befestigt sein. Hierbei soll der Ausdruck "fensterseitig" einen - in Fahrzeugquerrichtung - der nächstgelegenen Fensterfläche zugewandten Bereich, d. h. bevorzugt dem Fahrzeuginneren bzw. dem Mittelgang abgewandten Bereich, des Auflageteils bezeichnen. Zudem oder alternativ können die Halterung und/oder die Hohlprofilträger mit dem Auflageteil jeweils im Wesentlichen L-förmig verbunden sein. Mit anderen Worten können die Halterung und/oder die jeweiligen Hohlprofilträger als ein erster Schenkel und das Auflageteil als ein zweiter Schenkel einer in einer Ebene senkrecht zur Fahrzeuglängsrichtung L-förmigen Einrichtung ausgebildet sein. Zudem oder alternativ können die Halterung und/oder die Hohlprofilträger mit dem Auflageteil in einer Ebene senkrecht zur Fahrzeuglängsrichtung jeweils einen Winkel zwischen 70° und 120°, vorzugsweise einen Winkel von im Wesentlichen 90°, einschließen. D. h., bevorzugt schließen die beiden Schenkel (d. h. Halterung bzw. Hohlprofilträger und Auflageteil) in einer Ebene senkrecht zur Fahrzeuglängsrichtung einen Winkel von im Wesentlichen 90° ein. Auf vorteilhafte Weise wird dadurch eine einfach zu realisierende Möglichkeit der Anbindung der Hohlprofilträger an das Auflageteil realisiert.

Nach einem weiteren Aspekt der Erfindung kann das Auflageteil bodenseitig zumindest eine Luftauslassöffnung umfassen. Der Ausdruck "bodenseitig" soll hierbei als "in Richtung Fahrzeugboden orientiert" verstanden werden, d. h., das Auflageteil der Gepäckablage kann in einem zum Fahrzeugboden orientieren Bereich des Auflageteils zumindest eine Luftauslassöffnung umfassen. Die zumindest eine Luftauslassöffnung kann dabei über die, vorzugsweise als Hohlprofilträger ausgebildete, Halterung mit einem, im Bereich der Fahrgastraumdecke angeordneten, Lüftungskanal fluidisch verbunden sein. Mit anderen Worten kann die Halterung somit neben der Befestigung bzw. Aufhängung des Auflageteils an der Fahrgastraumdecke auch zur Luftführung bzw. als Luftleitung zwischen Auflageteil und Lüftungskanal ausgebildet sein. Letztgenannter Lüftungskanal kann sich dabei von einem Frontbereich des Fahrzeugs zu einem Heckbereich des Fahrzeugs, beispielsweise parallel zu einem in Fahrzeugen zur Personenbeförderung oftmals üblichen Mittelgang, erstrecken. Weiterhin kann für eine Versorgung der zumindest einen Luftauslassöffnung mit Frischluft und/oder klimatisierter Luft der Lüftungskanal zudem oder alternativ auch fluidisch an eine Einrichtung zur Belüftung- und/oder Klimatisierung des Fahrgastraums gekoppelt sein. Auf vorteilhafte Weise kann dadurch eine platzsparende und zugleich für Insassen nicht unmittelbar sichtbare Luftversorgung der zumindest einen Luftauslassöffnung gewährleistet werden.

Gemäß einem weiteren Aspekt der Erfindung kann das Auflageteil bodenseitig auch mehrere, d. h. zumindest zwei, Luftauslassöffnungen umfassen. Diese mehreren Luftauslassöffnungen können dabei über eine sich in Fahrzeuglängsrichtung erstreckende und im Bereich des Auflageteils angeordnete Luftleitung fluidisch verbunden sein. Mit anderen Worten können die einzelnen Luftauslassöffnungen somit sowohl unmittelbar über die im Bereich des Auflageteils angeordneten Luftleitung fluidisch verbunden sein als auch mittelbar über den im Bereich der Fahrgastraumdecke angeordneten Lüftungskanal in Fluidverbindung stehen. Auf vorteilhafte Weise kann dadurch eine ausreichende Luftversorgung der mehreren Luftauslassöffnungen gewährleistet werden.

Um weiterhin auf vorteilhafte Weise einen sicheren Halt für in die Gepäckablage eingelegte Gepäckstücke zu ermöglichen, kann das Auflageteil - nach einem weiteren Aspekt der Erfindung - zumindest abschnittsweise wannenförmig ausgebildet sein und/oder senkrecht zur Fahrzeuglängsrichtung ein wannenförmiges Profil aufweisen. D. h., mit anderen Worten können die Randbereiche des Auflageteils im Vergleich zu einem dazwischenliegenden Bereich hochgezogen sein. Zudem oder alternativ kann das Auflageteil auch ausschließlich mittels der Halterung im Fahrzeug gehaltert sein. Anders ausgedrückt kann das Auflageteil nur mittels der Halterung und nicht über zusätzlich vorhandene Halteeinrichtungen mit dem Fahrzeug verbunden sein. Zudem oder alternativ kann das Auflageteil auch als eine geschlossene, vorzugsweise undurchsichtige, Fläche ausgebildet sein. Mit anderen Worten kann das Auflageteil - abgesehen eventueller Öffnungen für Beleuchtungs-, Audio- und/oder Belüftungseinrichtungen - als durchgängiges, d. h. nicht unterbrochenes, Bauteil ausgebildet sein.

Nach einem weiteren Aspekt der Erfindung kann das Fahrzeug zur Personenbeförderung ein Omnibus sein. D. h. das Fahrzeug kann als ein Straßenfahrzeug ausgebildet sein, das zur Beförderung zahlreicher, vorzugsweise von mindestens neun, Personen, ausgelegt ist. Das Fahrzeug kann dabei einen Mittelgang umfassen, der zwei in Fahrzeuglängsrichtung verlaufende Passagiersitzreihen, mit z. B. jeweils zwei benachbarten Passagiersitze, trennt. Vorzugsweise umfasst das Fahrzeug dabei ferner zwei, jeweils oberhalb der Passagiersitzreihen angeordnete, vorstehend beschriebene Gepäckablagen.

Die zuvor beschriebenen Aspekte und Merkmale der Erfindung sind dabei beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: verschiedene schematische Ansichten (Seiten-, Front-, und Aufsicht) eines Fahrzeugs zur Personenbeförderung gemäß einer ersten Ausführungsform der Erfindung;
- Figur 2:: eine perspektivische Innenansicht eines Fahrgastraums eines Fahrzeugs zur Personenbeförderung gemäß einer Ausführungsform der Erfindung; und
- Figur 3:: zwei schematische Längsschnittdarstellung einer Gepäckablage eines Fahrzeugs zur Personenbeförderung gemäß einer weiteren Ausführungsform der Erfindung.

Gleiche oder funktional äquivalente Elemente sind dabei in allen Figuren mit denselben Bezugszeichen bezeichnet und zum Teil nicht gesondert beschrieben.

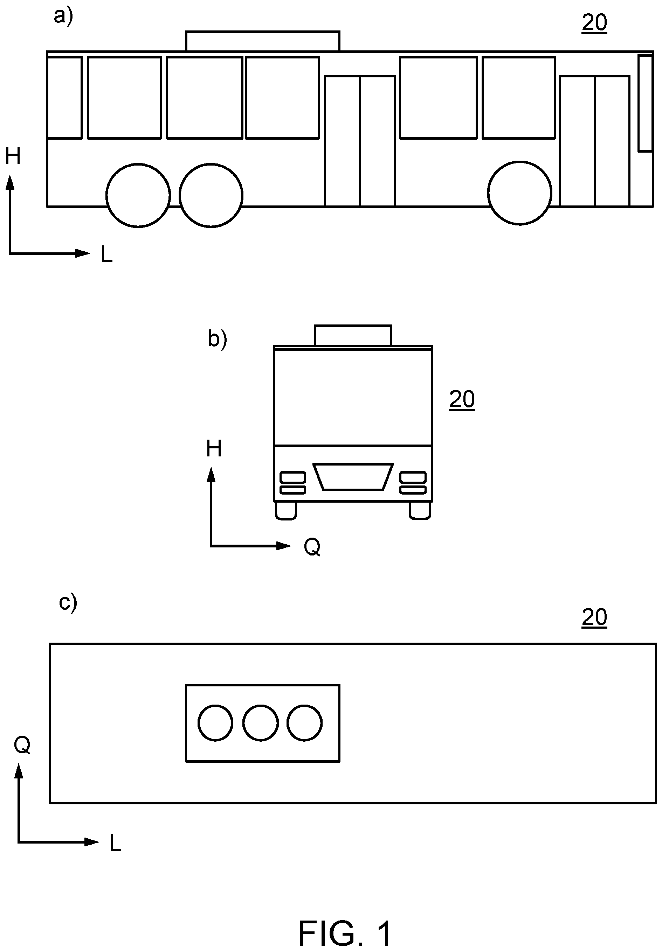

Figur 1 zeigt verschiedene schematische Ansichtsdarstellungen (Seitenansicht, Frontansicht, und Aufsicht) eines Fahrzeugs 20 zur Personenbeförderung gemäß einer ersten Ausführungsform der Erfindung. Vorliegend handelt es sich dabei - lediglich beispielhaft - um einen Omnibus, wobei das Fahrzeug 20 im Rahmen der Erfindung auch als ein Busanhänger, ein Zug, eine Straßenbahn, eine U-Bahn oder ein sonstiges zur Fahrgastbeförderung geeignetes Fahrzeug 20 ausgeführt sein kann. Die verschiedenen, mit a), b) und c) bezeichneten Ansichten des Fahrzeugs 20 sowie die darin mittels der Pfeile markierten Richtungen dienen hierbei lediglich dazu, die insgesamt in diesem Dokument verwendeten Richtungsangaben, darunter eine Fahrzeuglängsrichtung L, eine Fahrzeughöhenrichtung H und eine Fahrzeugquerrichtung Q, zu verdeutlichen. Gemäß der üblichen Verwendung sind diese drei Richtungen dabei entlang der Hauptachsen bzw. Symmetrieachsen des Fahrzeugs 20 orientiert und stehen wechselseitig senkrecht aufeinander. Im Detail zeigt die Darstellung a) eine Seitenansicht des Fahrzeugs 20 in einer Ebene senkrecht zur Fahrzeugquerrichtung Q, Darstellung b) eine Frontansicht des Fahrzeugs 20 in einer Ebene senkrecht zur Fahrzeuglängsrichtung L und Darstellung c) eine Aufsicht des Fahrzeugs 20 in einer Ebene senkrecht zur Fahrzeughöhenrichtung H. Basierend auf diesen Richtungsangaben werden im Folgenden nun weitere Details zur Ausgestaltung des Fahrgastraums 1 und insbesondere der Gepäckablage 4 eingehender behandelt.

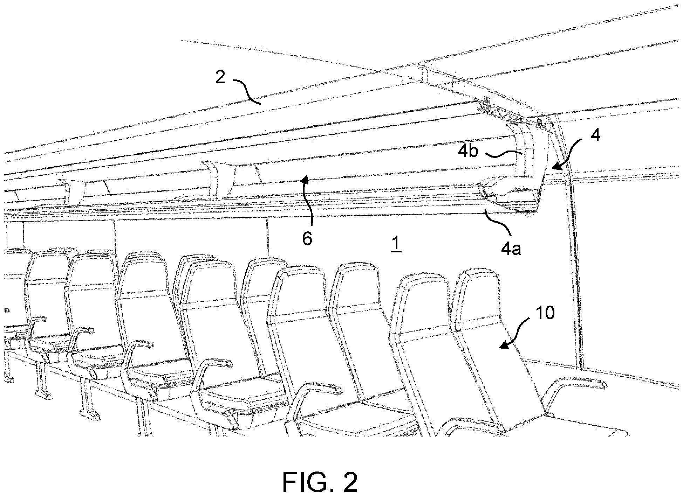

Figur 2 zeigt eine perspektivische Innenansicht eines Fahrgastraums 1 eines Fahrzeugs 20 zur Personenbeförderung gemäß einer Ausführungsform der Erfindung. Der Fahrgastraum 1 - d. h. der Raumbereich des Fahrzeugs 20, in welchem sich die zu befördernden Fahrgäste aufhalten dürfen bzw. sollen - wird dabei nach oben, d. h. in Fahrzeughöhenrichtung H, durch eine Fahrgastraumdecke 2 und seitlich, d. h. in Fahrzeugquerrichtung Q, zumindest abschnittsweise durch eine Fensterfläche 3 begrenzt. Als Fensterfläche kann hierbei der durch eine oder mehrere Fensterscheiben gebildete, vorzugsweise zusammenhängende, Bereich der Fahrzeugwandung verstanden werden, welcher der Belichtung des Fahrgastraums 1 und/oder einer Aussicht aus dem Fahrgastraum 1 dienen kann.

Der Fahrgastraum 1 umfasst weiterhin mehrere Passagiersitze 10, die vorliegend beispielhaft überwiegend in Form von zwei, durch einen Mittelgang getrennten und in Fahrzeuglängsrichtung L verlaufenden, Sitzreihen aus jeweils zwei benachbarten Passagiersitzen 10 angeordnet sind. Figur 2 ist weiterhin eine oberhalb der Passagiersitze 10 angeordnete Gepäckablage 4 zu entnehmen. Diese umfasst dabei ein, sich in Fahrzeuglängsrichtung L (d. h. vorliegend auch entlang der Sitzreihen) erstreckendes, Auflageteil 4a zur Aufnahme von Gepäckstücken, das auf Höhe der Fensterfläche 3 angeordnet ist, und eine Halterung 4b, mittels derer das Auflageteil 4a an der Fahrgastraumdecke 2 gehaltert ist.

Um nun auf vorteilhafte Weise insgesamt den Lichteinfall in den Fahrgastraum 1 sowie die Nutzbarkeit der Fensterfläche 3 des Fahrzeugs 20 zu erhöhen, ist vorgesehen, dass die Halterung 4b der Gepäckablage 4 für eine Sicht aus dem Fahrgastraum 1 nach draußen zumindest abschnittsweise durchbrochen ausgebildet ist. Im Fall der vorliegenden Ausführungsform ist die Halterung 4b dazu in Form mehrerer, in Fahrzeuglängsrichtung L verteilter, Hohlprofilträger mit viereckigen Querschnitt ausgebildet, die miteinander nicht unmittelbar, sondern lediglich mittelbar über das Auflageteil 4a verbunden sind. Durch diese Art der Halterung mittels vereinzelter, im Wesentlichen in Fahrzeughöhenrichtung H verlaufender Hohlprofilträger werden in der Gepäckablage 4 bzw. der Halterung 4b mehrere, in Fahrzeuglängsrichtung L beanstandete, materiallose Aussparungen 6 geschaffen, die jeweils eine direkte Sichtverbindung aus dem Fahrgastraum 1 auf die Fensterfläche 3 ermöglichen. Gleichzeitig erhöhen diese Aussparungen 6, die jeweils durch das Auflageteil 4a, die Fahrgastraumdecke 2 und den Hohlprofilträgern begrenzt bzw. gebildet werden, den Lichteinfall von der Fensterfläche 3 in den Fahrgastraum 1, insbesondere im Bereich des oftmals schlecht ausgeleuchteten Fahrzeugmittelgangs, sodass ggf. die Anbringung und/oder der Betrieb künstlicher Beleuchtungseinrichtungen (z. B. Deckenlampen) eingespart werden kann. Ein weiterer Vorteil dieser Art der Ausgestaltung der Gepäckablage 4 ist, dass im Bereich der Aussparungen 6 eine in diesem Bereich auf das Auflageteil 4a ablegbare Gepäckgröße vergrößert wird, da weder mittelgangseitig noch fensterseitig eine entsprechende Begrenzung (z. B. in Form einer Rückwand) vorhanden ist.

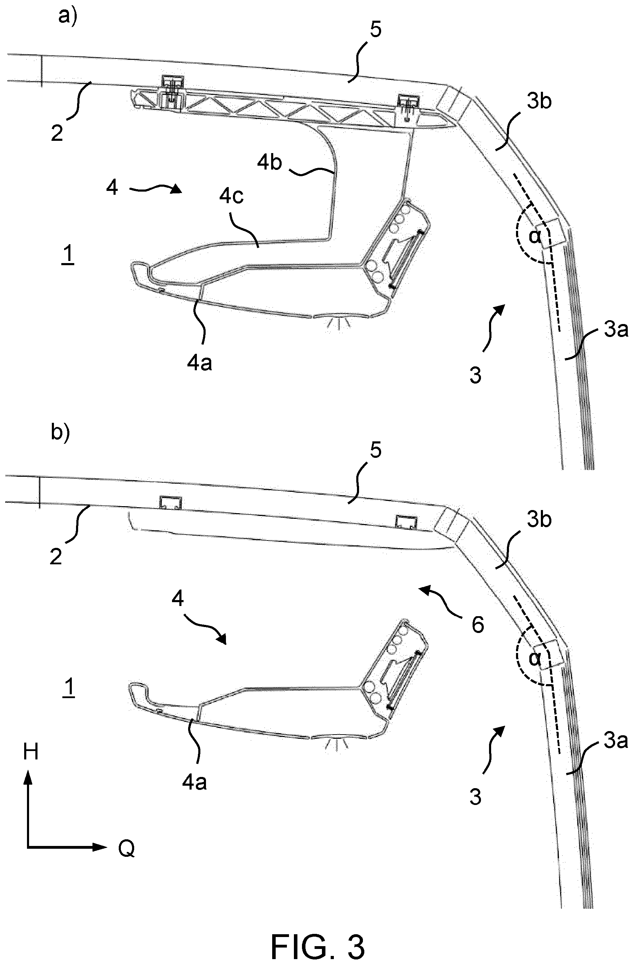

Figur 3 zeigt zwei schematische Längsschnittdarstellungen einer Gepäckablage 4 eines Fahrzeugs 20 zur Personenbeförderung gemäß einer weiteren Ausführungsform der Erfindung. Neben der Gepäckablage 4 selbst sind in Figur 3 auch Teile der Fahrgastraumdecke 2 und der Fensterfläche 3 des Fahrzeugs 20 dargestellt. Kennzeichnend für die vorliegende Erfindung ist dabei, dass die Fensterfläche 3 eine Panoramafensterfläche ist, um den Insassen einen möglichst großen Ausblick zu ermöglichen. Dazu weist die Panoramafensterfläche einen im Wesentlichen in Fahrzeughöhenrichtung H orientierten ersten Panoramafensterflächenabschnitt 3a und einen zum ersten Panoramafensterflächenabschnitt 3a geneigten zweiten Panoramafensterflächenabschnitt 3b auf, der sich oberhalb des ersten Panoramafensterflächenabschnitts 3a anschließt und den ersten Panoramafensterflächenabschnitt 3a mit dem Fahrzeugdach 5 verbindet. Wie durch die Winkelangabe α verdeutlicht, schließen die beiden Panoramafensterflächenabschnitte 3a und 3b vorliegend - lediglich beispielhaft - einen Winkel von 155° ein. Weiterhin können die beiden Panoramafensterflächenabschnitte 3a und 3b in Fahrzeuglängsrichtung L auch noch weitere Fensterscheiben bzw. Fensterscheibenabschnitte aufweisen.

Wie vorstehend bereits ausgeführt, umfasst die oberhalb der (nicht gezeigten) Passagiersitze 10 angeordnete Gepäckablage 4 wiederum ein, sich in Fahrzeuglängsrichtung L erstreckendes, Auflageteil 4a zur Aufnahme von Gepäckstücken sowie eine, vorliegend in Form eines Hohlprofilträgers ausgebildete, Halterung 4b, mittels derer das Auflageteil 4a - quasi in Form einer abgehängten Decke - an der Fahrgastraumdecke 2 gehaltert ist. Vorliegend ist dabei das Auflageteil 4a im Wesentlichen auf Höhe eines oberen Bereichs des ersten Panoramafensterflächenabschnitts 3a sowie die Halterung im Wesentlichen auf Höhe des zweiten Panoramafensterflächenabschnitts 3b angeordnet.

Um nun auf vorteilhafte Weise den hohen Lichteinfall durch die Panoramafensterfläche möglichst ungehindert ins Innere des Fahrgastraums 1, vorzugsweise in einen Bereich des oftmals schlecht ausgeleuchteten Mittelgangs, durchzuleiten, ist die Gepäckablage 4 zumindest abschnittsweise durchbrochen ausgebildet. D. h., die Halterung 4b ist in Fahrzeuglängsrichtung L nicht durchgängig ausgebildet. Mit anderen Worten sollen in der Halterung 4b Unterbrechungen, d. h. materiallose Aussparungen 6, vorhanden sein. Dieser Umstand wird durch die beiden Darstellungen a) und b) verdeutlicht, welche jeweils einen in Fahrzeuglängsrichtung L versetzten Schnitt durch die Gepäckablage 4 in einem Bereich ohne (Darstellung a) und mit (Darstellung b) Aussparung 6 zeigen.

Während sich in der oben gezeigten Schnittdarstellung a) die, vorliegend als Hohlprofilträger ausgebildete, Halterung 4b von der Fahrgastraumdecke 2 bis zum Auflageteil 4a erstreckt und mit diesem über einen sich in Fahrzeugquerrichtung Q erstreckenden Halterungsfuß 4c verbunden ist, ist in der unten gezeigten Schnittdarstellung b) keine unmittelbare Verbindung zwischen Fahrgastraumdecke 2 und Auflageteil 4a vorhanden. Mit anderen Worten weist die Halterung 4b bzw. die Gepäckablage 4 in diesem Bereich eine Aussparung 6 auf. Wie in diesem Zusammenhang z. B. auch nochmals Figur 2 zu entnehmen ist, ist das Auflageteil 4a in diesen Bereichen mit fehlender bzw. unterbrochener Halterung 4a "quasi freihängend" im Fahrgastraum 1 geführt, sodass in diesem Bereich eine Durchsicht aus dem Fahrgastraum 1 auf die Fensterfläche 3, hier insbesondere auf den zweiten Panoramafensterflächenabschnitt 3b, ermöglicht wird. Durch dieses Zusammenspiel aus Panoramafensterflächen und durchbrochen ausgebildeter Halterung 4a der Gepäckablage 4 kann somit insgesamt auf vorteilhafte Weise die Fensternutzung sowie der Lichteinfall in den Fahrzeuginnenraum vergrößert werden.

### Bezugszeichenliste

- 1: Fahrgastraum
- 2: Fahrgastraumdecke
- 3: Fensterfläche
- 3a: Erster Panoramafensterflächenabschnitt
- 3b: Zweiter Panoramafensterflächenabschnitt
- 4: Gepäckablage
- 4a: Auflageteil
- 4b: Halterung
- 4c: Halterungsfuß
- 5: Fahrzeugdach
- 6: Aussparung
- 10: Passagiersitze
- 20: Fahrzeug
- H: Fahrzeughöhenrichtung
- L: Fahrzeuglängsrichtung
- Q: Fahrzeugquerrichtung

## Patentansprüche

1. Fahrzeug (20) zur Personenbeförderung, vorzugsweise ein Zug oder ein Omnibus, aufweisend:
a) einen Fahrgastraum (1), der Passagiersitze (10) umfasst und der nach oben durch eine Fahrgastraumdecke (2) und seitlich zumindest abschnittsweise durch eine Fensterfläche (3), begrenzt wird; und
b) eine oberhalb der Passagiersitze (10) angeordnete Gepäckablage (4), vorzugsweise eine Überkopf-Gepäckablage, umfassend:
b₁) ein sich in Fahrzeuglängsrichtung (L) erstreckendes, vorzugsweise horizontales, Auflageteil (4a) zur Aufnahme von Gepäckstücken, das auf Höhe der Fensterfläche (3) angeordnet ist; und
b₂) eine Halterung (4b), mittels derer das Auflageteil (4a) an der Fahrgastraumdecke (2) gehaltert ist;
wobei die Halterung (4b) der Gepäckablage (4) für eine Sicht aus dem Fahrgastraum (1) nach draußen zumindest abschnittsweise durchbrochen ausgebildet ist;
**dadurch gekennzeichnet, dass** die Fensterfläche (3) für die Sicht aus dem Fahrgastraum (1) wo die Halterung (4b) durchbrochen ausgebildet ist, eine Panoramafensterfläche ist, aufweisend einen im Wesentlichen in Fahrzeughöhenrichtung (H) orientierten ersten Panoramafensterflächenabschnitt (3a) und einen dazu gekrümmten und/oder zum ersten Panoramafensterflächenabschnitt (3a) geneigten zweiten Panoramafensterflächenabschnitt (3b), der den ersten Panoramafensterflächenabschnitt (3a) mit einem Fahrzeugdach (5) verbindet.

2. Fahrzeug (20) nach Anspruch 1, **dadurch gekennzeichnet, dass** die Halterung (4b) in Fahrzeuglängsrichtung (L) nicht durchgängig ausgebildet ist und/oder dass die Gepäckablage (4) zumindest abschnittsweise rückwandlos ausgebildet ist.

3. Fahrzeug (20) nach Anspruch 1 oder 2, **dadurch gekennzeichnet, dass** die Halterung (4b) zumindest teilweise auf Höhe des zweiten Panoramafensterflächenabschnitts (3b) angeordnet ist.

4. Fahrzeug (20) nach einem der vorherigen Ansprüche, **dadurch gekennzeichnet, dass** die Gepäckablage (4) zumindest eine Aussparung (6) umfasst, die ausgebildet ist,
- eine direkte Sichtverbindung aus dem Fahrgastraum (1) durch die zumindest eine Aussparung (6) auf die Fensterfläche (3) zu ermöglichen; und/oder
- einen Lichteinfall von der Fensterfläche (3) durch die zumindest eine Aussparung (6) in den Fahrgastraum (1), vorzugsweise in einem Bereich eines Mittelgangs des Fahrgastraums (1), zu ermöglichen.

5. Fahrzeug (20) nach Anspruch 4, **dadurch gekennzeichnet, dass** durch die zumindest eine Aussparung (6) eine in diesem Bereich auf das Auflageteil (4a) ablegbare Gepäckgröße vergrößert wird.

6. Fahrzeug (20) nach einem der Ansprüche 4 oder 5, **dadurch gekennzeichnet, dass** die zumindest eine Aussparung (6) in Fahrzeuglängsrichtung (L) mindestens eine Querschnittsfläche von 10 dm² aufweist und/oder in Fahrzeuglängsrichtung (L) eine größere Ausdehnung als in Fahrzeughöhenrichtung (H) aufweist.

7. Fahrzeug (20) nach einem der Ansprüche 4 bis 6, **dadurch gekennzeichnet,**
- **dass** sich die zumindest eine Aussparung (6) in Fahrzeughöhenrichtung (H) vom Auflageteil (4a) bis zur Fahrgastraumdecke (2) erstreckt; und/oder
- **dass** die zumindest eine Aussparung (6) von dem Auflageteil (4a), der Halterung (4b) und der Fahrgastraumdecke (2) begrenzt wird.

8. Fahrzeug (20) nach einem der Ansprüche 4 bis 7, **gekennzeichnet durch** mehrere, vorzugsweise zumindest vier, in Fahrzeuglängsrichtung (L) beabstandete Aussparungen (6), die vorzugsweise zumindest einen Abstand von 20 cm besitzen.

9. Fahrzeug (20) nach einem der vorherigen Ansprüche, **dadurch gekennzeichnet, dass** die Halterung (4b) mehrere, in Fahrzeuglängsrichtung (L) verteilte, Hohlprofilträger zur Befestigung des Auflageteils (4a) an der Fahrgastraumdecke (2) aufweist.

10. Fahrzeug (20) nach Anspruch 9, **dadurch gekennzeichnet, dass** die Hohlprofilträger jeweils im Wesentlichen in Fahrzeughöhenrichtung (H) orientiert sind und/oder einen viereckigen Querschnitt aufweisen.

11. Fahrzeug (20) nach einem der Ansprüche 9 oder 10, **dadurch gekennzeichnet, dass** die Hohlprofilträger jeweils
- an einem fensterseitigen Endbereich des Auflageteils (4b) befestigt sind; und/oder
- mit dem Auflageteil (4b) im Wesentlichen L-förmig verbunden sind; und/oder
- mit dem Auflageteil (4b) in einer Ebene senkrecht zur Fahrzeuglängsrichtung (L) einen Winkel (α) zwischen 70° und 120°, vorzugsweise einen Winkel (α) von im Wesentlichen 90°, einschließen.

12. Fahrzeug (20) nach einem der vorherigen Ansprüche, **dadurch gekennzeichnet, dass** das Auflageteil (4b) bodenseitig zumindest eine Luftauslassöffnung (7) umfasst, die über die, vorzugsweise als Hohlprofilträger ausgebildete, Halterung (4b) mit einem, im Bereich der Fahrgastraumdecke (2) angeordneten, Lüftungskanal fluidisch verbunden ist.

13. Fahrzeug (20) nach einem der vorherigen Ansprüche, **dadurch gekennzeichnet,**
- **dass** das Auflageteil (4a) zumindest abschnittsweise wannenförmig ausgebildet ist und/oder senkrecht zur Fahrzeuglängsrichtung (L) ein wannenförmiges Profil aufweist; und/oder
- ausschließlich mittels der Halterung (4a) im Fahrzeug (20) gehaltert ist; und/oder
- als eine geschlossene Fläche ausgebildet ist.

14. Fahrzeug (20) nach einem der vorherigen Ansprüche, **dadurch gekennzeichnet, dass** das Fahrzeug (20) ein Omnibus ist.

## Claims

1. Vehicle (20) for passenger transport, preferably a train or a bus, comprising:
a) a passenger compartment (1), which comprises passenger seats (10) and which is limited upwards by a passenger compartment ceiling (2) and laterally at least in sections by a window surface (3); and
b) a luggage rack (4), preferably an overhead luggage rack, arranged above the passenger seats (10), comprising:
b₁) a, preferably horizontal, support member (4a) extending in the longitudinal direction (L) of the vehicle for accommodating luggage, which is arranged at the height of the window surface (3); and
b₂) a mount (4b), by which the support member (4a) is mounted to the passenger compartment ceiling (2);
wherein the mount (4b) of the luggage rack (4) is open in at least some sections for a view from the passenger compartment (1) to the outside;
**characterized in that** the window surface (3), for the view from the passenger compartment (1) where the mount (4b) is open, is a panoramic window surface, comprising a first panoramic window section (3a) oriented substantially in the vehicle height direction (H) and a second panoramic window section (3b) which is curved and/or inclined with respect to the first panoramic window section (3a) and which connects the first panoramic window section (3a) to a vehicle roof (5).

2. Vehicle (20) according to claim 1, **characterized in that** the mount (4b) is not continuous in the longitudinal direction (L) of the vehicle and/or **in that** the luggage rack (4) is constructed without a rear wall, at least in sections.

3. Vehicle (20) according to claim 1 or 2, **characterized in that** the mount (4b) is arranged at least partially at the height of the second panoramic window section (3b).

4. Vehicle (20) according to one of the preceding claims, **characterized in that** the luggage rack (4) comprises at least one recess (6) which is constructed
- to allow a direct line of sight from the passenger compartment (1) through the at least one recess (6) to the window surface (3); and/or
- to allow light to enter the passenger compartment (1) from the window surface (3) through the at least one recess (6), preferably in a region of a center aisle of the passenger compartment (1).

5. Vehicle (20) according to claim 4, **characterized in that** the at least one recess (6) increases a luggage size that can be placed on the support member (4a) in this area.

6. Vehicle (20) according to one of claims 4 or 5, **characterized in that** the at least one recess (6) has a cross-sectional area of at least 10 dm² in the longitudinal direction (L) of the vehicle and/or has a greater extent in the longitudinal direction (L) of the vehicle than in the vertical direction (H) of the vehicle.

7. Vehicle (20) according to one of claims 4 to 6, **characterized in that**
- the at least one recess (6) extends in the vehicle height direction (H) from the support member (4a) to the passenger compartment ceiling (2); and/or
- the at least one recess (6) is delimited by the support member (4a), the mount (4b) and the passenger compartment ceiling (2).

8. Vehicle (20) according to one of claims 4 to 7, **characterized by** several, preferably at least four, recesses (6) spaced apart in the longitudinal direction (L) of the vehicle, which are preferably at least 20 cm apart.

9. Vehicle (20) according to one of the preceding claims, **characterized in that** the mount (4b) has a plurality of hollow profile supports distributed in the longitudinal direction (L) of the vehicle for fastening the support member (4a) to the passenger compartment ceiling (2).

10. Vehicle (20) according to claim 9, **characterized in that** the hollow profile supports are each oriented essentially in the vehicle height direction (H) and/or have a quadrangular cross-section.

11. Vehicle (20) according to one of claims 9 or 10, **characterized in that** the hollow profile supports are each
- fastened to a window-side end region of the mount (4b); and/or
- connected to the mount (4b) in a substantially L-shaped manner; and/or
- enclose an angle (α) of between 70° and 120°, preferably an angle (α) of substantially 90°, with the mount (4b) in a plane perpendicular to the longitudinal direction (L) of the vehicle.

12. Vehicle (20) according to one of the preceding claims, **characterized in that** the support member (4b) comprises at least one air outlet opening (7) on the floor side, which is fluidically connected to a ventilation duct arranged in the region of the passenger compartment ceiling (2) via the mount (4b), which is preferably designed as a hollow profile support.

13. Vehicle (20) according to one of the preceding claims, **characterized in that**
- the support member (4a) is at least in sections trough-shaped and/or has a trough-shaped profile perpendicular to the longitudinal direction (L) of the vehicle; and/or
- is held in the vehicle (20) exclusively by the mount (4a); and/or
- is designed as a closed surface.

14. Vehicle (20) according to one of the preceding claims, **characterized in that** the vehicle (20) is a bus.

## Revendications

1. Véhicule (20) destiné au transport de personnes, de préférence un train ou un omnibus, ledit véhicule comportant :
a) un habitacle (1) qui comprend des sièges de passager (10) et qui est délimité en haut par un plafond d'habitacle (2) et latéralement au moins par portions par une surface de fenêtre (3) ; et
b) un rangement de bagages (4) disposé au-dessus des sièges de passager (10), de préférence un rangement de bagages aérien, comprenant :
b1) une partie de pose (4a), de préférence horizontale, qui s'étend dans la direction longitudinale (L) du véhicule, qui est destinée à recevoir des bagages et qui est disposée au niveau de la surface de fenêtre (3) ; et
b2) un support (4b) qui permet de maintenir la partie de pose (4a) au plafond d'habitacle (2) ; le support (4b) du rangement de bagages (4) étant conçu avec des perforations au moins par portions afin de voir l'extérieur depuis l'habitacle (1) ;
**caractérisé en ce que** la surface de fenêtre (3) destinée à voir depuis l'habitacle (1) l'endroit où le support (4b) est conçu avec des perforations, est une surface de fenêtre panoramique, comportant une première portion de surface de fenêtre panoramique (3a) orientée sensiblement dans le sens de la hauteur (H) du véhicule et une deuxième portion de surface de fenêtre panoramique (3b) incurvée vers, et/ou inclinée par rapport à, la première portion de surface de fenêtre panoramique (3a) et qui relie la première portion de surface de fenêtre panoramique (3a) à un toit de véhicule (5).

2. Véhicule (20) selon la revendication 1, **caractérisé en ce que** le support (4b) n'est pas conçu de manière continue dans la direction longitudinale (L) du véhicule et/ou **en ce que** le rangement de bagages (4) est conçu au moins par portions sans paroi arrière.

3. Véhicule (20) selon la revendication 1 ou 2, **caractérisé en ce que** le support (4b) est disposé au moins partiellement au niveau de la deuxième portion de surface de fenêtre panoramique (3b).

4. Véhicule (20) selon l'une des revendications précédentes, **caractérisé en ce que**
le rangement de bagages (4) comprend au moins un évidement (6) qui est conçu
- pour permettre une ligne de vue directe sur la surface de la fenêtre (3) depuis l'habitacle (1) à travers ledit au moins un évidement (6) ; et/ou
- pour permettre à la lumière d'être incidente à l'habitacle (1), de préférence dans une zone d'un passage central de l'habitacle (1), depuis la surface de fenêtre (3) à travers au moins un évidement (6).

5. Véhicule (20) selon la revendication 4, **caractérisé en ce que** l'au moins un évidement (6) augmente la taille des bagages pouvant être déposés sur la partie de pose (4a) dans cette zone.

6. Véhicule (20) selon l'une des revendications 4 ou 5, **caractérisé en ce que** l'au moins un évidement (6) présente au moins une aire en coupe transversale de 10dm² dans la direction longitudinale (L) du véhicule et/ou une plus grande extension dans la direction longitudinale (L) du véhicule que dans le sens de la hauteur (H) du véhicule.

7. Véhicule (20) selon l'une des revendications 4 à 6, **caractérisé en ce que**
- l'au moins un évidement (6) s'étend dans le sens de la hauteur (H) du véhicule depuis la partie de pose (4a) jusqu'au plafond d'habitacle (2) ; et/ou
- l'au moins un évidement (6) est délimité par la partie de pose (4a), le support (4b) et le plafond d'habitacle (2) .

8. Véhicule (20) selon l'une des revendications 4 à 7, **caractérisé par** plusieurs, de préférence au moins quatre, évidements (6) qui sont espacés dans la direction longitudinale (L) du véhicule et qui sont de préférence espacés d'au moins 20 cm.

9. Véhicule (20) selon l'une des revendications précédentes, **caractérisé en ce que** le support (4b) comporte plusieurs profilés porteurs creux répartis dans la direction longitudinale (L) du véhicule et destinés à la fixation de la partie de pose (4a) au plafond d'habitacle (2).

10. Véhicule (20) selon la revendication 9, **caractérisé en ce que** les profilés porteurs creux sont chacun orientés sensiblement dans le sens de la hauteur (H) du véhicule et/ou ont une section transversale carrée.

11. Véhicule (20) selon l'une des revendications 9 ou 10, **caractérisé en ce que** chacun des profilés porteurs creux
- est fixé à une région d'extrémité côté fenêtre de la partie de pose (4b) ; et/ou
- est relié sensiblement en forme de L à la partie de pose (4b) ; et/ou
- forme avec la partie de pose (4b) dans un plan perpendiculaire à la direction longitudinale (L) du véhicule, un angle (α) compris entre 70° et 120°, de préférence un angle (α) sensiblement de 90°.

12. Véhicule (20) selon l'une des revendications précédentes, **caractérisé en ce que** la partie de pose (4b) comprend côté fond au moins une ouverture de sortie d'air (7) qui relie fluidiquement le support (4b), de préférence conçu comme un profilé porteur creux, à un conduit de ventilation disposé dans la zone du plafond d'habitacle (2).

13. Véhicule (20) selon l'une des revendications précédentes, **caractérisé en ce que**
- la partie de pose (4a) est au moins par portions en forme d'auge et/ou présente un profil en forme d'auge perpendiculairement à la direction longitudinale (L) du véhicule ; et/ou
- est maintenue dans le véhicule (20) exclusivement au moyen du support (4a) ; et/ou
- est conçue comme une surface fermée.

14. Véhicule (20) selon l'une des revendications précédentes, **caractérisé en ce que** le véhicule (20) est un omnibus.
